# EUROPEAN PATENT APPLICATION

(11) **EP 4 642 159 A2**
(43) Date of publication of application: **29.10.2025**
(21) Application number: 25171631.2
(22) Date of filing: 22.04.2025
(51) Int. Cl.: H05B 6/06, F24C 3/12, F24C 7/08, G01K 1/143, H05B 6/12

(54) **SPRING BASED TEMPERATURE SENSOR HOLDERS FOR A COOKTOP**

(30) Priority: 25.04.2024 US 202418646000
(71) Applicant: Whirlpool Corporation, Benton Harbor, MI 49022 (US)
(72) Inventor: Claire, Sagar, Benton Harbor 49022 (US); Suraj Narendra, Kadam, Benton Harbor 49022 (US); Srinivasaiah, Arun Kumar, Benton Harbor 49022 (US)
(74) Representative: Eisenführ Speiser

(57) **Abstract**

A cooktop appliance (10) includes at least one burner (12) and a temperature detection assembly (14) for measuring a temperature proximate the at least one burner (12). The temperature detection assembly (14) includes a temperature sensor (16), a spring (18) that extends from a base (20) to a distal end (22) defining a pocket (24), and a ball element (26). The ball element (26) that includes a rounded shape is at least partially located in the pocket (24) and floats relative to the pocket (24), and the temperature sensor (16) is coupled to the ball element (26).

## Description

### FIELD OF THE DISCLOSURE

The present disclosure generally relates to a temperature detection assembly for measuring a temperature proximate a cooktop burner.

### BACKGROUND

Cooking appliances that include cooktops typically have one or more burners that employ a variety of heating technologies. During operation, the amount of heat generated by the burners can set by a user between a plurality of heating settings. While these heat settings can be utilized to accurately predict the amount of heat generated by the burners to some extent, the predictions can sometimes be inconsistent. For example, cooktop architectures are often varied within specific heating technology categories and across multiple heating technologies. Some of these cooktop architectures include a cooktop panel over the burners. For example, cooktops that employ induction or other electric types of heating generally include a cooktop panel that is made of a glass or a glass-ceramic material. In use, cookware such as pots and pans are positioned on the cooktop panel. Therefore, the heat generated by the burners, and, more particularly, the amount of heat that is imparted on the cookware, is more accurately reflected by, for example, the temperature of the cooktop panel. Some cooktops employ heat sensors near the cooktop panel. These heat sensors are ideally in contact with the cooktop panel for measuring heat directly under the cookware (i.e., at the cooktop panel). However, due to different architectures and manufacturing constraints, it is difficult to complete and maintain surface contact between a heat sensor and the cooktop panel.

Accordingly, the present disclosure relates to a temperature detection assembly for measuring a temperature proximate a cooktop burner.

### SUMMARY OF THE DISCLOSURE

According to one aspect of the present disclosure, a temperature detection assembly for measuring a temperature proximate a cooktop burner. The temperature detection assembly includes a temperature sensor and a beam spring that includes an elongated body that is flexible. The elongated body extends from a base to a distal end. A ball element is coupled to the distal end and floats relative to the distal end, and the temperature sensor is coupled to the ball element.

According to another aspect of the present disclosure, a cooktop appliance includes at least one burner, a coil tray located under the at least one burner, a cooktop panel located over the at least one burner, and a temperature detection assembly for measuring a temperature of the cooktop panel over the at least one burner. The temperature detection assembly includes a temperature sensor, and a beam spring that includes an elongated body that is integrally formed with the coil tray. The elongated body extends from a base to a distal end that is biased towards the cooktop panel. A ball element is coupled to the distal end and floats relative to the distal end. The temperature sensor is coupled to the ball element and has maximum surface contact with the cooktop panel.

According to yet another aspect of the present disclosure, a cooktop appliance includes at least one burner and a temperature detection assembly for measuring a temperature proximate the at least one burner. The temperature detection assembly includes a temperature sensor, a spring that extends from a base to a distal end defining a pocket, and a ball element. The ball element that includes a rounded shape is at least partially located in the pocket and floats relative to the pocket, and the temperature sensor is coupled to the ball element.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is an upper perspective view of a cooktop appliance, in accordance with an aspect of the present disclosure;
FIG. 2 is an upper perspective view of a cooktop appliance with a cooktop panel removed, in accordance with an aspect of the present disclosure;
FIG. 3 is an upper perspective view of a temperature detection assembly, in accordance with an aspect of the present disclosure;
FIG. 4A is a cross-sectional view of a temperature detection assembly in a first position, in accordance with an aspect of the present disclosure;
FIG. 4B is a cross-sectional view of a temperature detection assembly in a second position, in accordance with an aspect of the present disclosure;
FIG. 4C is a cross-sectional view of a temperature detection assembly in a third position, in accordance with an aspect of the present disclosure; and
FIG. 5 is a side view of a temperature detection assembly in a partially disassembled state, in accordance with an aspect of the present disclosure.

The components in the figures are not necessarily to scale, emphasis instead being placed upon illustrating the principles described herein.

### DETAILED DESCRIPTION

The present illustrated embodiments reside primarily in a temperature detection assembly for measuring a temperature proximate a cooktop burner. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

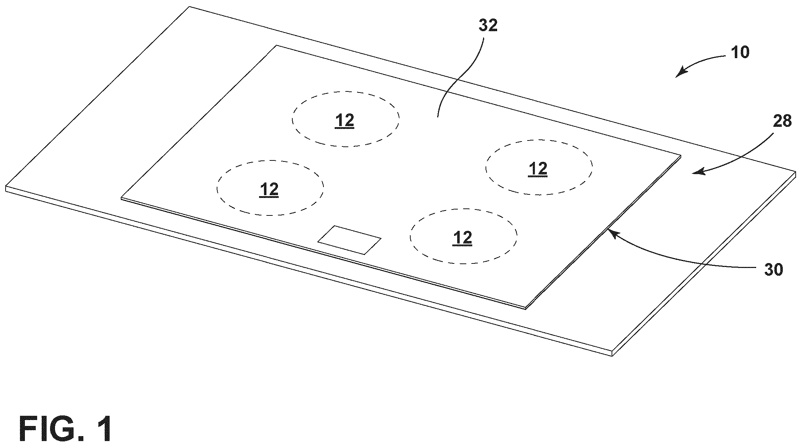

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer and/or user, and the term "rear" shall refer to the surface of the element further from the intended viewer and/or user. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . ." does not, without more constraints, preclude the existence of additional identical elements in the process, method, article, or apparatus that comprises the element.

Referring initially to FIGS. 1-5, a cooktop appliance is generally designated by reference numeral 10. The cooktop appliance 10 includes at least one burner 12 and a temperature detection assembly 14 for measuring a temperature proximate the at least one burner 12. The temperature detection assembly 14 includes a temperature sensor 16, a spring 18 that extends from a base 20 to a distal end 22 defining a pocket 24, and a ball element 26. The ball element 26 that may include a rounded shape is at least partially located in the pocket 24 and floats relative to the pocket 24, and the temperature sensor 16 is coupled to the ball element 26.

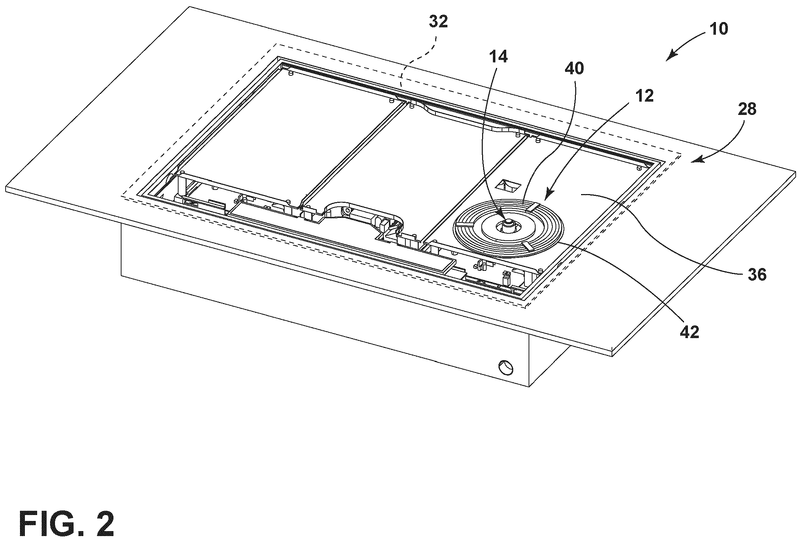

With reference now to FIGS. 1 and 2, while the at least one burner 12 of the cooktop appliance 10 is depicted as employing induction heating the cooktop appliance 10 may employ a variety of other heating technologies. For example, the cooktop appliance 10 may employ electric heating, gas heating, and/or heating that employs all fuel types. The cooktop appliance 10 includes a cooktop 28 that the at least one burner 12 is located on. In some embodiments, the cooktop appliance 10, as depicted in FIG. 1, may include a plurality of burners 12 and each burner 12 may include a separate one of the temperature detection assemblies 14. In some embodiments, the cooktop appliance 10 may include a cooking chamber that can be accessed via a door (not shown). The cooking chamber may employ any of the above-referenced technologies. However, in other embodiments, it should be appreciated that the cooktop appliance 10 may be a portable countertop assembly with the at least one burner 12. The cooktop 28 may include a cooktop panel 30 located above the at least one burner 12. The cooktop panel 30 may be formed of a glass, a glass-ceramic, a granite, or other types of material tops and includes an upper surface 32 and a lower surface 34. As will appreciated, the temperature detection assembly 14 facilitates holding the temperature sensor 16 such that the temperature sensor 16 maintains maximum surface contact with the cooktop panel 30 (e.g., the lower surface 34).

With continued reference to FIGS. 1 and 2, the cooktop appliance 10 may further include a coil tray 36 and one or more printed circuit boards that may be configured to control operation of the at least one burner 12. The at least one burner 12 (e.g., each burner 12) may include induction coils 40 located on top of a burner plate 42 and ferrite foils 44 located under the burner plate 42 on top of the coil tray 36. The induction coils 40 and the burner plate 42 may both define an aperture 46 (e.g., centrally to the induction coils 40). In some embodiments, the ball element 26 and the temperature sensor 16 may extend through the aperture 46 into contact with the cooktop panel 30. In this manner, temperature readings from the temperature sensor 16 are from a central region of the at least one burner 12, where a cooking vessel (e.g., an induction compatible pot or a pan) will be generally centrally located.

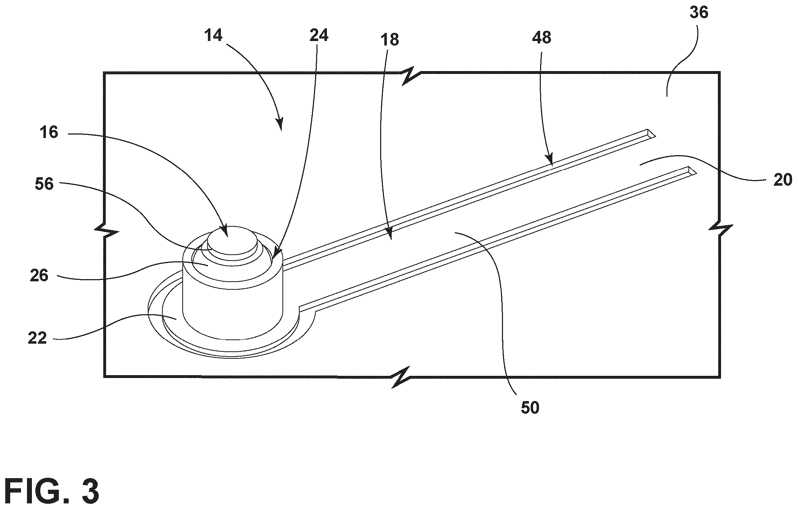

With reference now to FIGS. 2 and 3, in some embodiments, the spring 18 may be integral with the coil tray 36. More particularly, the coil tray 36 may include a passage 48 (e.g., a cut or elongated opening) extending from a side of the base 20 to and around the distal end 22 and to another side of the base 20. The spring 18 may be configured as a beam spring and include a body 50 that extends from the base 20 to the distal end 22. The body 50 (e.g., the coil tray 36) may be formed of a material that includes elastic memory (e.g., a metal material such as aluminum). In this manner, the distal end 22 and, by extension, the temperature sensor 16 are biased towards the cooktop panel 30 (e.g., the lower surface 34).

With reference now to FIGS. 3-4C, the ball element 26 defines a channel 52 and the temperature sensor 16 is at least partially located in the channel 52. More particularly, the temperature sensor 16 may include a sensor body 54 extending into the channel 52 and a flared head 56 abutting the ball element 26 proximate the channel 52. The flared head 56 may define a flat top surface that, via floating of the ball element 26, is parallel to and in contact with the cooktop panel 30 (e.g., the lower surface 34) for maximum surface contact.

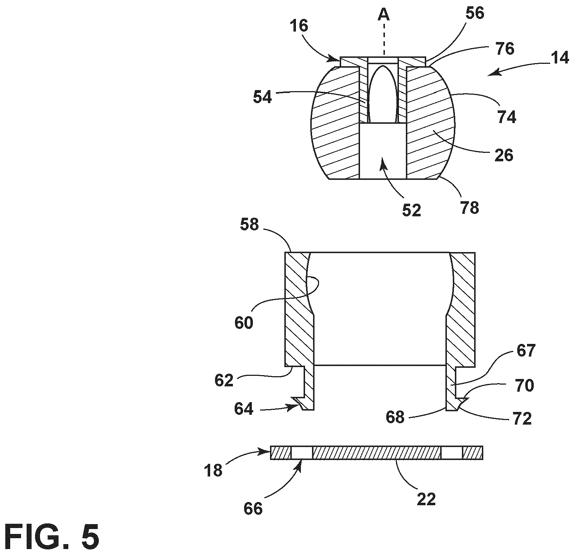

With continued reference to FIGS. 3-5, the distal end 22 may include a cup 58 that has a sidewall 60 defining the pocket 24. The cup 58 includes a bottom side 62 defining at least one hook 64 (e.g., a pair of hooks 64) and the spring 18 (e.g., the distal end 22) includes an aperture 66 (e.g., an equal or less number of apertures 66 to the hooks 64) that is mated with the at least one hook 64 (FIG. 5). The at least one hook 64 (e.g., each hook 64) may include a leg portion 67 that extends at least a thickness of the coil tray 36 that terminates at an apex 68. The leg portion 67 extends to the apex 68 and defines a stepped surface 70 extending outwardly (e.g., away from the pocket 24) that merges into a chamfered surface 72 angled or curved towards the apex 68. In this manner, the cup 58 (e.g., the hooks 64) can be snap fit into the distal end 22 (e.g., the apertures 66) during assembly.

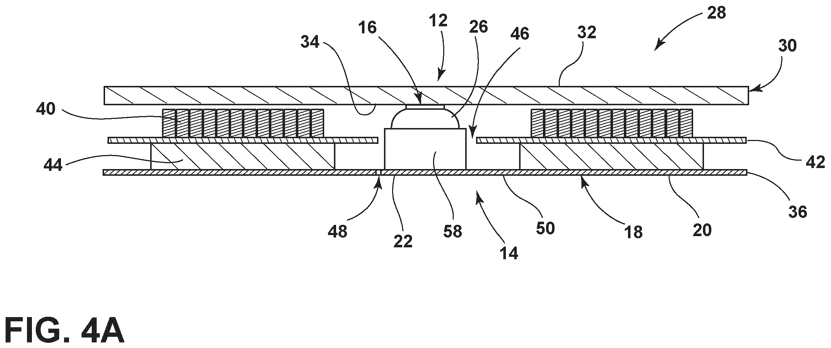

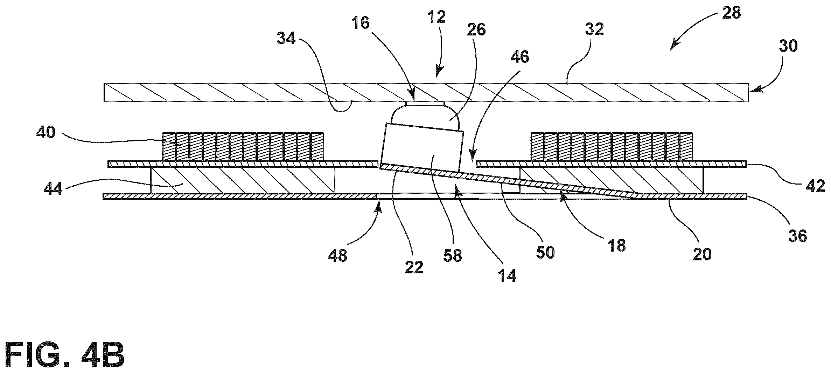

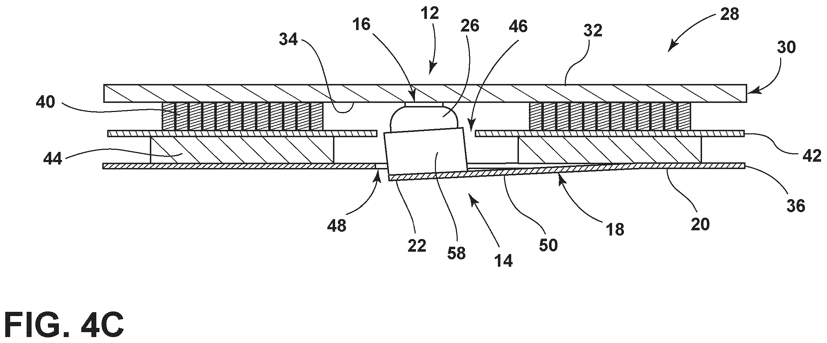

With reference now to FIGS. 4A-5, the body 50 of the spring 18 may be utilized for various architectures of the cooktop appliance 10 that have different internal spacing between components. For example, in FIG. 4A, the cup 58, the ball element 26, and the temperature sensor 16 may, together, define a height that is substantially equal to a distance between the coil tray 36 and the cooktop panel 30 (e.g., the lower surface 34). In some embodiments, the body 50 may be biased towards the cooktop panel 30 and depending on internal spacing, flex towards the cooktop panel 30 (FIG. 4B) or flex away from the cooktop panel (FIG. 4C). However, it should be appreciated in FIGS. 4A-4C that the temperature sensor 16 remains in maximum contact with the cooktop panel 30 regardless of the spacing set during manufacturing or changes in the spacing resulting from transportation and use.

With reference now to FIG. 5, the sidewall 60 (e.g., the pocket 24) may be substantially circular about a first axis A. The ball element 26 may be partially or fully substantially shaped as a sphere or spheroid. For example, the ball element 26 may include a ball element side surface 74 that extends between a top ball element surface 76 and a bottom ball element surface 78. The ball element side surface 74 is curved and defined by one of a uniform or non-uniform (e.g., gradually increasing and/or decreasing) radius. In some embodiments the top ball element surface 76 and the bottom ball element surface 78 are flat. In this manner, the flared head 56 may abut and be substantially parallel to the top ball element surface 76. The sidewall 60 of the cup 58 may be at least partially curved and/or angled along the first axis A. More particularly, the curve or taper retains the ball element 26 within the cup 58 along the axis A while allowing the ball element 26 to float therein. In some embodiments, the ball element 26 may be formed of an elastic material that can sustain high temperatures. For example, the ball element 26 may be formed of Polytetrafluoroethylene ("PTFE"). In some embodiments, the temperature sensor 16 may be configured as a Negative Temperature Coefficient ("NTC") sensor.

With reference now to FIGS. 1-5, in operation, the ball element 26 ball element is rotatable 360° within the cup 58. For example, the ball element 26 and, by extension, the temperature sensor 16 is biased towards the cooktop panel 30 (e.g., the lower surface 34) via the spring 18 substantially along the first axis A. The ball element 26 then floats or rotates 360° within the cup 58 via pressure along the first axis A until the flat top surface of the temperature sensor 16 is substantially parallel to and in maximum contact with the cooktop panel 30 (e.g., the lower surface 34). In this manner, the positioning of the ball element 26 and the temperature sensor 16 are self-correcting. During manufacturing, transportation, and everyday use, the location of the cooktop panel 30, the coil tray 36, and/or components of the temperature detection assembly 14 may move relative to one another. As such, the spring 18 may flex between multiple positions (e.g., substantially along the first axis A) while the floating operation of the ball element 26 keeps the temperature sensor 16 in maximum contact with the cooktop panel 30.

The disclosure herein is further summarized in the following paragraphs and is further characterized by combinations of any and all of the various aspects described therein.

According to one aspect of the present disclosure, a temperature detection assembly for measuring a temperature proximate a cooktop burner. The temperature detection assembly includes a temperature sensor and a beam spring that includes an elongated body that is flexible. The elongated body extends from a base to a distal end. A ball element is coupled to the distal end and floats relative to the distal end, and the temperature sensor is coupled to the ball element.

According to another aspect, a ball element defines a channel and a temperature sensor is at least partially located in the channel.

According to yet another aspect, a temperature sensor includes a body extending into a channel and a flared head abutting a ball element proximate the channel.

According to still yet another aspect, a distal end defines a pocket and a ball element is located in the pocket.

According to another aspect, a distal end includes a cup that has a sidewall defining a pocket.

According to yet another aspect, a sidewall is substantially circular about a first axis.

According to still yet another aspect, a ball element is substantially shaped as a sphere or spheroid.

According to another aspect, a sidewall is at least partially curved or angled along a first axis.

According to yet another aspect, a ball element is formed of Polytetrafluoroethylene ("PTFE").

According to still yet another aspect, a sensor is an NTC sensor.

According to another aspect of the present disclosure, a coil tray located under the at least one burner, a cooktop panel located over the at least one burner, and a temperature detection assembly for measuring a temperature of the cooktop panel over the at least one burner. The temperature detection assembly includes a temperature sensor, a beam spring that includes an elongated body that is integrally formed with the coil tray. The elongated body extends from a base to a distal end that is biased towards the cooktop panel. A ball element is coupled to the distal end and floats relative to the distal end. The temperature sensor is coupled to the ball element and has maximum surface contact with the cooktop panel.

According to another aspect, a ball element is rotatable 360° relative to a distal end of a spring to maintain maximum surface contact with the cooktop panel.

According to yet another aspect, a distal end defines a pocket and a ball element is located in the pocket.

According to yet another aspect, a distal end includes a cup that includes a sidewall defining a pocket.

According to another aspect, a cup includes a bottom side defining at least one hook and a beam spring includes an aperture that is mated with the hook.

According to yet another aspect, at least one burner includes a plurality of burners and a temperature detection assembly includes a plurality of temperature detection assemblies, each of the plurality of burners are located proximate to at least one of the plurality of temperature detection assemblies for measuring a temperature of each of the plurality of burners.

According to yet another aspect, at least one burner includes at least one induction burner.

According to yet another aspect of the present disclosure, a cooktop appliance includes at least one burner and a temperature detection assembly for measuring a temperature proximate the at least one burner. The temperature detection assembly includes a temperature sensor, a spring that extends from a base to a distal end defining a pocket, and a ball element. The ball element that includes a rounded shape is at least partially located in the pocket and floats relative to the pocket, and the temperature sensor is coupled to the ball element.

According to another aspect, a cooktop panel is located over at least one burner, and a spring is biased towards the cooktop panel and a temperature sensor has surface contact with the cooktop panel.

According to yet another aspect, a ball element defines a channel and a temperature sensor includes a body extending into the channel and a flared head abutting the ball element proximate the channel. The flared head has surface contact with a cooktop panel.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A temperature detection assembly (14) for measuring a temperature proximate a cooktop burner (12), comprising:
a temperature sensor (16);
a beam spring (18) including an elongated body (50) that is flexible, the elongated body (50) extending from a base (20) to a distal end (22); and
a ball element (26) is coupled to the distal end (22) and floats relative to the distal end (22), and the temperature sensor (16) is coupled to the ball element (26).

2. The temperature detection assembly (14) of claim 1, wherein the ball element (26) defines a channel (52) and the temperature sensor (16) is at least partially located in the channel (52).

3. The temperature detection assembly (14) of claim 2, wherein the temperature sensor (16) includes a sensor body (54) extending into the channel (52) and a flared head (56) abutting the ball element (26) proximate the channel (52).

4. The temperature detection assembly (14) as in one of claims 1-3, wherein the distal end (22) defines a pocket (24) and the ball element (26) is located in the pocket (24).

5. The temperature detection assembly (14) of claim 4, wherein the distal end (22) includes a cup (58) that has a sidewall (60) defining the pocket (24).

6. The temperature detection assembly (14) of claim 5, wherein the cup (58) includes a bottom side (62) defining at least one hook (64) and the beam spring (18) includes at least one aperture (66) that is mated with the at least one hook (64).

7. The temperature detection assembly (14) of claim 6, wherein the at least one hook (64) includes a pair of hooks (64) and the at least one aperture (66) includes a pair of apertures (66) mated with respective ones of the pair of hooks (64).

8. The temperature detection assembly (14) as in claim 6 or claim 7, wherein the at least one hook (64) is located on a leg potion (67) and includes an apex (68) and defines a stepped surface (70) extending outwardly from the leg portion (67) that merges into a chamfered surface (72) that is at least one of angled or curved towards the apex (68).

9. The temperature detection assembly (14) of claim 5, wherein the sidewall (60) is substantially circular about a first axis (A).

10. The temperature detection assembly (14) of claim 5, wherein the sidewall (60) is at least partially curved or angled along the first axis (A).

11. The temperature detection assembly (14) of claim 9 or claim 10, wherein the ball element (26) is substantially shaped as a sphere or spheroid.

12. The temperature detection assembly (14) of claim 4, wherein the ball element (26) is rotatable 360° within the pocket (24) to maintain a maximum surface contact.

13. The temperature detection assembly (14) as in one of claims 1-3, wherein the ball element (26) is formed of Polytetrafluoroethylene ("PTFE").

14. The temperature detection assembly (14) as in one of claims 1-3, wherein the temperature sensor (16) is a Negative Temperature Coefficient ("NTC") sensor.

15. A cooking appliance (10) including the cooktop burner (12) with the temperature detection assembly (14) as in one of claims 1-3.
